# EUROPÄISCHE PATENTSCHRIFT

(11) **EP 1 285 553 B1**
(45) Veröffentlichungstag und Bekanntmachung des Hinweises auf die Patenterteilung: **03.09.2008**
(21) Anmeldenummer: 01949218.0
(22) Anmeldetag: 30.05.2001
(51) Int. Cl.: H04Q 7/38

(54) **VERFAHREN ZUR KANALZUTEILUNG IN EINEM FUNK-KOMMUNIKATIONSSYSTEM**
METHOD FOR CHANNEL ASSIGNMENT IN A RADIO COMMUNICATION SYSTEM
PROCEDE D'ATTRIBUTION DE CANAL DANS UN SYSTEME DE RADIOCOMMUNICATION

(30) Priorität: 30.05.2000 DE 10026741
(43) Veröffentlichungstag der Anmeldung: 26.02.2003
(73) Patentinhaber: Nokia Siemens Networks GmbH & Co. KG, 81541 München (DE)
(72) Erfinder: WEGMANN, Bernhard, 83607 Holzkirchen (DE)
(86) Internationale Anmeldenummer: PCT/DE2001/002049
(87) Internationale Veröffentlichungsnummer: WO 2001/093618

(56) Entgegenhaltungen:
- WO-A-98/59517
- WO-A-99/07172
- WO-A-99/26430
- US-A- 5 448 750
- AZIZ G ET AL: "Dynamic Resource Allocation for GSM-GPRS Services over a LEO Satellite System" PROCEEDINGS OF ICICS. INTERNATIONAL CONFERENCE ON INFORMATION COMMUNICATIONS AND SIGNAL PROCESSING, XX, XX, Bd. 1A1.5, 9. September 1997 (1997-09-09), Seiten 1-5, XP002084744

## Beschreibung

Die Erfindung bezieht sich auf ein Verfahren zur adaptiven Kanalzuteilung in einem Funk-Kommunikationssystem, insbesondere Mobilfunksystem, auf der Grundlage einer Gewichtung der Eigenschaften der zur Verfügung stehenden Kanäle auf der Funkschnittstelle, sowie eine Einrichtung zur Durchführung des Verfahrens.

Für die Übertragung von Nachrichten auf dem Funkwege benötigt man Kanäle. Der Ausdruck Kanal soll im weiteren ganz allgemein als Ressource verstanden sein, die zur Übertragung einer Nachricht zwischen einem Sender und einem Empfänger benötigt wird. Es kann sich dabei zum Beispiel um einen Frequenzkanal in einem FDMA-System (Frequency Division Multiple Access-System) handeln, um einen Zeitschlitz in einem TDMA-System (Time Division Multiple Access-System), um einen Spreizcode in einem CDMA-System (Code Division Multiple Access-System) oder um eine Kombination einzelner oder mehrerer vorgenannter und/oder weiterer Übertragungswege handeln.

Für UMTS (Universal Mobile Telecommunication System), einem breitbandigen Funkkommunikationssystem der 3. Generation, sind CDMA-Verfahren vorgesehen. Hierbei werden die Einzelsignale einer Nachricht sendeseitig mit jeweils unterschiedlichen Codesequenzen versehen, die eine eindeutige Zuordnung der Einzelsignale zur Nachricht ermöglichen. Während dieses Prozesses tritt eine Spreizung der Einzelsignale auf, was zu einer Vervielfachung der Frequenzbandbreite mit den Möglichkeiten einer Vielfachnutzung führt. Empfangsseitig wird üblicherweise ein JD-Verfahren (Joint Detection) angewendet, um unter Kenntnis der Spreizcodes der Teilnehmer eine störungsfreie Erkennung der übertragenen Daten vorzunehmen.

Zur bidirektionalen Übertragung von Nachrichten zwischen Teilnehmerstationen und ihrem untersten Verbindungsknoten Node B im Netzwerk kommen zwei Modi zum Einsatz, Frequenzduplex FDD (Frequency Division Duplex), hier werden verschiedene Frequenzunterbänder innerhalb eines zugewiesenen Frequenzbandes für Uplink und Downlink verwendet, und Zeitduplex TDD (Time Division Duplex), bei dem für Uplink und Downlink unterschiedliche Zeitschlitze ein und desselben Frequenzbandes genutzt werden.

Im FDD-Modus (Frequency Division Duplex) des UMTS wird CDMA mit FDMA zu einem extrem breitbandigen W-CDMA-System kombiniert und im TDD-Modus (Time Division Duplex) wird der Vielfachzugriff durch ein breitbandiges FDMA/TDMA-System realisiert, wobei in bestimmten Zeitschlitzen zusätzlich ein Vielfachzugriff nach dem CDMA-Verfahren erlaubt ist. Man spricht bei letzerem Verfahren, das sich aus Kompatibilitätsgründen eng an das weltweit verbreitete GSM (Global System for Mobile Communications) anlehnt, auch verkürzt von einem TD/CDMA-System. Eine auf TD/CDMA-basierende Weiterentwicklung zeichnet sich durch eine hochgenaue Synchronisation der Empfangssignale aus und wird mit TD/SCDMA (SCDMA = Synchronous CDMA) bezeichnet.

Im folgenden soll ein TD/CDMA-System als Beispiel für die Anwendung der Erfindung herangezogen werden, ohne daß die Erfindung hierauf irgendwie beschränkt wäre.

Für die Funkschnittstelle ist die Ressource "Frequenz" ein äußerst knappes Gut, weshalb zur Deckung des rasch anwachsenden Bedarfs verschiedene Verfahren zur besseren Kapazitätsausnutzung eingeführt wurden.

Ein Verfahren besteht in der sendeenergiemäßigen Verteilung der zur Verfügung stehenden limitierten spektralen Ressourcen auf Funkzellen, wodurch in gewissen Abständen dieselben Frequenzen ohne gegenseitige interferenzbedingte Beeinträchtigungen der Teilnehmer immer wieder verwendet werden können.

Ein weiteres Konzept zur Kapazitätserweiterung besteht in einer dynamischen Kanalzuteilung (Dynamic Channel Allocation DCA). DCA ermöglicht eine intelligente Verteilung der Kanäle und eine dynamische Zuweisung von Übertragungskapazität an gemeinsam verwaltete Funkzellen. Die Zuweisung kann verkehrsadaptiv, signaladaptiv und/oder interferenzadaptiv gesteuert sein.

Bei letzterem Verfahren wird die Interferenzleistung auf den verschiedenen Kanälen in die Zuteilungsentscheidung einbezogen. Die Kanalzuteilung kann zentral oder dezentral gesteuert sein. Eine zentrale Zuteilung ermöglicht den größten Kapazitätsgewinn, verlangt aber auch den höchsten Signalisierungs- und Rechenaufwand. Eine dezentrale Arbeitsweise des Kanalzuteilungsalgorithmus ist flexibler und weniger rechenaufwendig, muß aber sicherstellen, daß Verbindungen in angrenzenden Zellen nicht unzulässig beeinträchtigt werden. Hierzu ist ein als "Channel Segregation" bekanntes Verfahren entwickelt worden (Y. Furuya, Y. Akaiwa, "Channel Segregation - A Self-Organized Dynamic Channel Allocation Method": Application to TDMA/FDMA Microcellular System", IEEE Journal Selected Areas in Communications Vol. 11, No 6, August 1993, S. 949 - 954). Danach werden Erfolg oder Mißerfolg einer vorhergehenden Kanalzuteilungsentscheidung, gemessen an Interferenzen, unter Verwendung eines lernfähigen Algorithmus bei einer zukünftigen Kanalvergabe berücksichtigt. Mit der Zeit bildet sich auf diese Weise ein stabiles Wiederverwendungsmuster heraus.

In der WO 98/59517 A1 wird ein Verfahren zur Zuteilung von Ressourcen von Kommunikationskanälen aufgezeigt. Hierzu findet eine Priorisierung von Kanalstrukturen statt, wobei unter einer Kanalstruktur eine Kombination von benachbarten Kanälen verstanden wird. Die Priorisierung findet unter Berücksichtigung von Parametern, insbesondere der Eintrittswahrscheinlichkeit (arrival probability) statt. Unter der Eintrittswahrscheinlichkeit für eine Kanalstruktur wird hierbei die Wahrscheinlichkeit verstanden, dass in der jeweiligen Zelle bei einer Nachfrage nach Ressourcen die nachgefragte Ressource die jeweilige Kanalstruktur aufweist. Jeder Ressourcennachfrage (arrival) wird dann eine der Kanalstrukturen zugewiesen. Die Zuteilung von Ressourcen zu der Ressourcenanfrage erfolgt unter anderem in Abhängigkeit von der Priorisierung der Kanalstrukturen.

Funk-Kommunikationssysteme zukünftiger Generationen werden ein breites Spektrum von Sprach-, Video- und sowohl leitungsvermittelten als auch paketvermittelten Datendiensten für Multimedia-Anwendungen und Internet-basierte Dienste über die Funkschnittstelle ermöglichen. Neben den gewohnten Sprach-, Paging- und E-mail-Diensten werden auch Multimedia-Dienste für Video-Mails, Musik- und Fernsehübertragungen, Bildtelefonie und Datenbankabfragen berücksichtigt sein. Es wird asymmetrische Dienste und Dienste mit wählbarem Datendurchsatz und wählbarer Verbindungsqualität geben. Unter dem Begriff Dienst (Service) soll somit ganz allgemein das Realisieren einer bestimmten Form des Austausches von Informationen verstanden werden. Unter dem Begriff Dienstgüte oder Verbindungsqualität (Quality of Service QoS) vereinigt sich ganz allgemein Bitfehlerrate, Datenrate und Verzögerungszeit zu einem (Dienst-)Parameter. Beispielsweise verlangt der Dienst Sprachübertragung in UMTS Verzögerungszeiten < 30 ms und eine Bitfehlerrate < 10⁻³. Datendienste hingegen dürfen im allgemeinen größere Verzögerungszeiten haben, z. B. < 300 ms, jedoch nur Bitfehlerraten bzw. Paketverluste von < 10⁻⁶.

Verwendet man eine adaptive Kanalzuteilung auf der Basis von Channel Segregation, die sich einerseits mittels Messungen an eine Verkehrs- und Interferenzsituation anpaßt und zum anderen mit Gedächtnis eine günstige Vorauswahl möglicher Kanäle (Zeitschlitze) einer Funkzelle hält, in Verbindung mit einem gemischten Dienstangebot und/oder einer TDD-Einrichtung mit variablem Umschaltpunkt zwischen Uplink- und Downlink-Zeitschlitzen, kommt es je nach den Qualitätskriterien eines Dienstes und/oder der verwendeten Übertragungsrichtung eines Zeitschlitzes möglicherweise zu völlig gegenläufigen Aktualisierungen des Wiederverwendungsmusters, was dieses völlig unbrauchbar werden läßt.

Der Erfindung liegt deshalb die Aufgabe zugrunde, ein Kanalzuteilungsverfahren anzugeben, das sich in günstiger Weise für Funk-Kommunikationssysteme mit unterschiedlichen Diensten und/oder unterschiedlichen Wünschen hinsichtlich der Dienstgüte und/oder unterschiedlichen Verbindungsrichtungen ein und desselben Zeitschlitzes in Systemen mit variablen Umschaltpunkten zwischen Uplink- und Downlink und/oder sonstigen verbindungsrelevanten Parametern eignet. Hierzu sind zur Zeit noch keine adäquaten Lösungsmöglichkeiten bekannt.

Das Verfahren mit den Merkmalen des Anspruchs 1 und die Einrichtung mit den Merkmalen des Anspruchs 11 lösen dieses Problem. Vorteilhafte Weiterbildungen sind in den abhängigen Ansprüchen angegeben.

Das erfindungsgemäße Verfahren zur Kanalzuteilung in einem Funk-Kommunikationssystem sieht vor, dass auftretende Verbindungsanforderungen einer von wenigstens zwei Anforderungsklassen zugeordnet werden, die sich durch wenigstens einen verbindungsrelevanten Parameter voneinander unterscheiden, dass die zur Verfügung stehenden Kanäle für jede der Anforderungsklassen priorisiert werden und dass die Reihenfolge der Zuteilung der Kanäle zu aufeinander folgenden Verbindungsanforderungen in Abhängigkeit der Priorisierung der jeweiligen Anforderungsklasse erfolgt. Dies bedeutet, dass nicht nur eine einzige Priorisierung der Kanäle erfolgt, die für jegliche Verbindungsanforderung gilt, sondern dass wenigstens zwei unterschiedliche Priorisierungen vorgenommen werden, die abhängig von der jeweiligen Anforderungsklasse sind. Auf diese Weise kann die Kanalzuteilung für jede Anforderungsklasse optimiert werden. Dabei wird berücksichtigt, dass jede Klasse eigene Anforderungen beispielsweise an die Kanalqualität stellt.

Einer der verbindungsrelevanten Parameter kann beispielsweise die Art des durch die Verbindungsanforderung jeweils gewählten Dienstes, die jeweils gewählte Dienstgüte oder die jeweils gewählte Verbindungsrichtung ist. Dementsprechend erfolgt eine Priorisierung der zur Verfügung stehenden Kanäle in Abhängigkeit der für Verbindungsanforderungen zugelassenen Dienste, der zugelassenen Dienstgüte oder der Verbindungsrichtung. Die Verbindungsanforderungen eines ersten Dienstes, z.B. eines Sprachdienstes, werden beispielsweise einer ersten Anforderungsklasse zugeteilt und die Verbindungsanforderungen eines zweiten Dienstes, z.B. eines höherratigen Datendienstes, einer zweiten Anforderungsklasse. Für beide Klassen erfolgt dann eine unabhängige Priorisierung der Eignung der zur Verfügung stehenden Kanäle.

Nach einer Weiterbildung wird die Priorisierung der Kanäle für jede der Anforderungsklassen in Abhängigkeit des Erfolgs einer Zuteilung des betreffenden Kanals zu einer Verbindung der jeweiligen Anforderungsklasse aktualisiert. D.h. die Priorisierung wird erfolgsabhängig angepasst. Bei einer erfolgreichen Zuteilung des entsprechenden Kanals wird seine Priorisierung ggf. erhöht, bei einer fehlgeschlagenen Zuteilung ggf. erniedrigt. Die Aktualisierung der Priorisierung erfolgt dabei bezogen auf die Anforderungklasse derjenigen Verbindungsanforderung, für die die Kanalzuteilung erfolgreich bzw. nicht erfolgreich durchgeführt wurde.

Erfindungsgemäß wird ein flexibles Spektrum an Trägerdiensten unterstützt, indem Kanalauswahl und Prioritätenverwaltung gezielt für einen ganz bestimmten Dienst, eine ganz bestimmte Dienstgüte, eine gewünschte Verbindungsrichtung und/oder sonstige verbindungsrelevante Parameter erfolgt, wobei durch die genannte Weiterbildung der Erfindung geeignet vermieden wird, daß Dienste mit anderen Anforderungen eine Aussage über die allgemeine Kanalqualität verfälschen.

Hierzu werden in Ausgestaltung der Erfindung auf der Grundlage einer Gewichtung der Eigenschaften der zur Verfügung stehenden Kanäle auf der Funkschnittstelle eine oder mehrere Prioritätentabellen je Funkzelle für die Eignung der Kanäle in Abhängigkeit von der Art eines bestimmten Dienstes, von der Dienstgüte (Qualität einer Verbindung), von der Verbindungsrichtung und/oder sonstigen verbindungsrelevanten Parametern erstellt und ständig mittels eines Kanalzuteilungsalgorithmus aktualisiert, der seinerseits auf diese Prioritätentabelle(n) zur Entscheidungsfindung zugreift. Eine Prioritätentabelle kann entsprechend viele Spalten für ausgewählte verbindungsrelevante Parametern und entsprechend viele Zeilen für auszuwählende Kanäle, beispielsweise also Zeitschlitze mit genügend freien Codes, enthalten. Ebenso kann eine Prioritätentabelle Teil einer bereits vorhandenen oder einer anzulegenden komplexeren Tabelle für das Ressourcenmanagement sein. Dabei ist der Begriff Tabelle umfassend als Synonym für eine variable Werteübersicht zu verstehen, die geeignet ist, einem Rechenwerk zur Verfügung gestellt zu werden. Die Parameter können dabei separiert in verschiedenen Spalten in einer Tabelle oder verteilt auf mehrere Tabellen gehalten werden.

Beim Verbindungsaufbau wird in weiterer Ausgestaltung eine gewünschte Dienstanforderung erkannt und in der für die Verbindungsrichtung, den Dienst, die Dienstgüte und/oder einer oder mehrere sonstigen verbindungsrelevanten Parameter entsprechenden Spalte einer Prioritätentabelle der beste freie Kanal mit der höchsten Priorität gesucht. Anschließend wird für diesen Kanal die Interferenzsituation geprüft und mit einem Schwellwert verglichen. Handelt es sich um einen Breitbanddienst, welcher eine Kanalbündelung fordert, die sich z. B. durch einen Mehrschlitz- und/oder Mehrcodebetrieb ergibt, werden weitere Kanäle mit Hilfe des Algorithmus ausgewählt. Liegt die Interferenzbelastung der Kanäle für den geforderten Dienst im erlaubten Bereich, wird die Priorität der Kanäle in der hierfür vorgesehenen Spalte einer Prioritätentabelle oder einer sonstigen beim Ressourcenmanagement implementierten komplexeren Werteübersicht für den Dienst, die Dienstgüte, die Verbindungsrichtung und/oder andere variable oder feste Parameter und nur dort erhöht. Ist die Interferenz zu hoch, wird die Priorität der Kanäle in der entsprechenden Spalte der Prioritätentabelle und nur dort erniedrigt. Die Priorität in den anderen Spalten dieser Prioritätentabelle oder in anderen Prioritätentabellen bleibt also unbeeinflußt.

Somit widerspiegelt die genannte Prioritätentabelle dynamisch aktualisierte Erfahrungswerte für Kanäle, beispielsweise Zeitschlitze, unter Berücksichtigung verbindungsrelevanter Parameter, wobei nach einer weiteren Ausgestaltung statische, vom Netzwerk vorgegebene Werte in vorteilhafter Weise einbezogen werden.

Nach einer weiteren Ausgestaltung nehmen nur die verbindungsrelevanten Anteile der Prioritätentabelle(n) Einfluß auf die Kanalzuteilung und entsprechend werden auch nur diese Anteile aktualisiert.
Insgesamt hat dies zur Folge, daß die Auswahl der Kanäle unter Auswertung einer oben beschriebenen Prioritätentabelle gezielt für einen Dienst, eine verlangte Dienstgüte, eine Verbindungsrichtung und gegebenenfalls weitere Verbindungskriterien erfolgt.

Hierdurch wird vermieden, daß Dienste mit anderen Qualitätsanforderungen eine Aussage über die allgemeine Kanalqualität verfälschen.

Die Erfindung soll anhand eines Ausführungsbeispiels näher erläutert werden. In der zugehörigen Zeichnung zeigt:
- Fig. 1: eine schematische Darstellung einer Rahmenstruktur der Funkschnittstelle in einem TD-CDMA-System,
- Fig. 2: ein Flußdiagramm eines erfindungsgemäß erweiterten Algorithmus für eine Kanalzuteilung in einem TD-CDMA-System und
- Fig. 3: ein Beispiel einer priorisierten Tabelle für ein TD-CDMA-System nach der Erfindung.

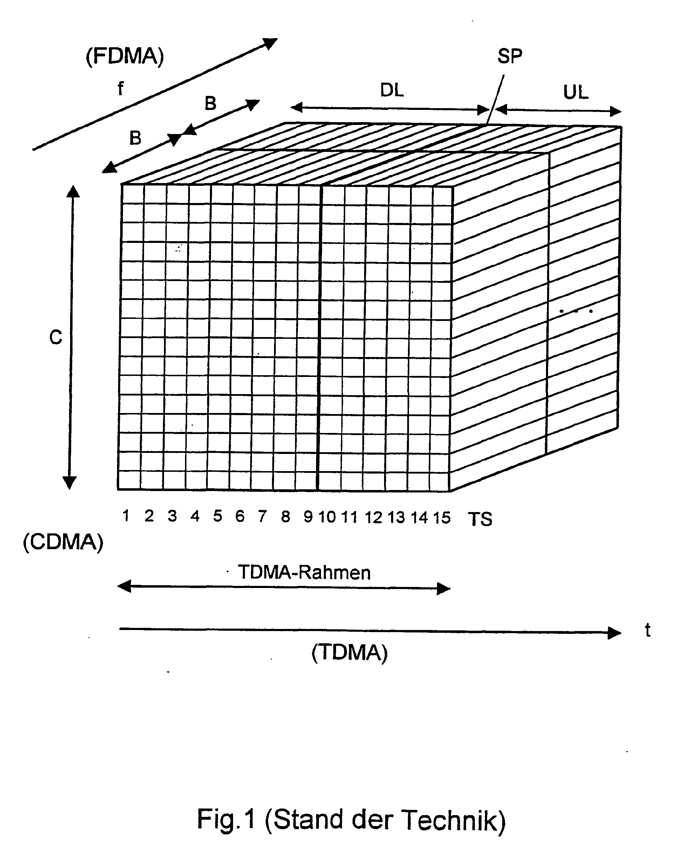

Aus Fig. 1 ist die Rahmenstruktur einer TD-CDMA-Funkübertragung ersichtlich. Gemäß einer TDMA-Komponente findet eine Aufteilung eines breitbandigen, die FDMA-Komponente realisierenden Frequenzbereiches, beispielsweise der Bandbreite B = 5 MHz, in mehrere Zeitschlitze TS gleicher Zeitdauer, von denen beispielsweise 15 einen TDMA-Rahmen bilden, statt. Innerhalb der Zeitschlitze TS werden Informationen mehrerer Verbindungen in Funkblöcken übertragen. Die Daten sind verbindungsindividuell nach einer CDMA-Komponente mit einer Feinstruktur, dem Spreizcode C, gespreizt. Ein Teil der Zeitschlitze TS wird gemäß TDD in Abwärtsrichtung DL und ein Teil der Zeitschlitze in Aufwärtsrichtung UL desselben Frequenzbandes B genutzt. Dazwischen liegt ein variabler Umschaltpunkt SP. Je nach Dienst und geforderter Dienstgüte werden für eine Verbindung ein oder mehrere Zeitschlitze TS und ein oder mehrere Spreizcodes C benötigt, die in Abhängigkeit des aktuellen Umschaltpunktes SP und der aktuell freien Ressourcen ausgemessen und belegt werden.

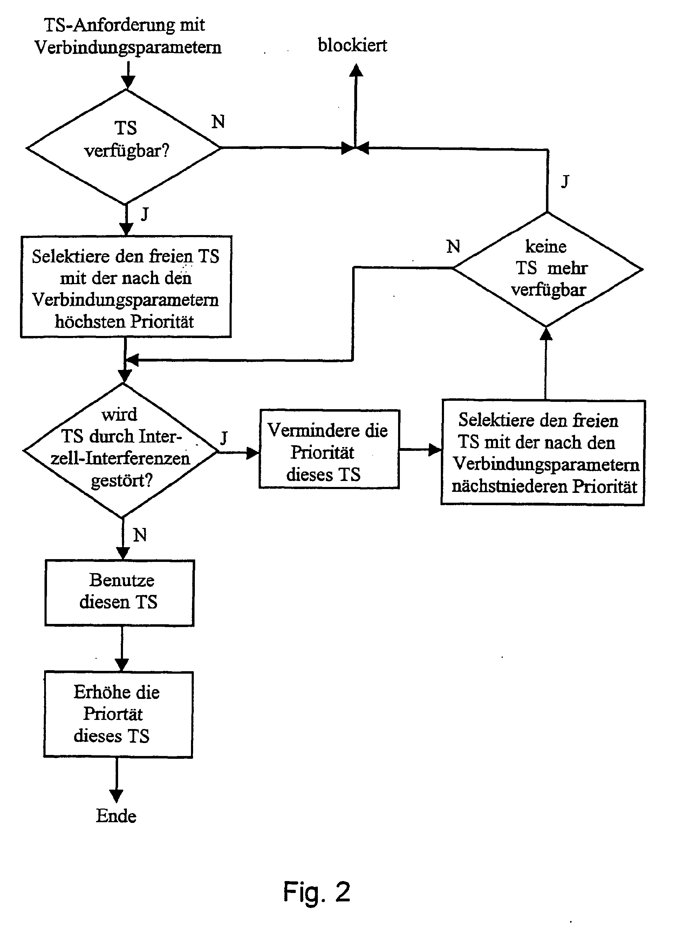

Die adaptive Zuteilung eines Kanals ist in einem Flußdiagramm nach Fig. 2 näher dargestellt, wobei im Beispiel für einen Kanal ein Zeitschlitz TS mit genügend freien Codes steht. Fordert ein Teilnehmer eine Verbindung mit bestimmten Parametern an, zum Beispiel Dienst, Dienstgüte, Verbindungsrichtung, wird zunächst vom Netzwerk geprüft, ob hierfür freie Zeitschlitze mit ausreichend freien Codes zur Verfügung stehen. Ist dies nicht der Fall, erfolgt eine Blockierungsmeldung. Sind Zeitschlitze TS frei, selektiert der Algorithmus einen Zeitschlitz TS mit genügend für den Dienst erforderlichen Codes mit der nach den Verbindungsparametern höchsten Priorität, d.h. den Zeitschlitz TS mit der höchsten Priorität innerhalb der den Verbindungsparameter enthaltenden Tabelle. Als nächstes wird geprüft, ob dieser Zeitschlitz TS eine zu hohe Interferenz von den benachbarten Funkzellen erfährt. Ist dies der Fall, wird die Priorität in besagter Prioritätentabelle für diesen Zeitschlitz TS verringert. Danach wird ein neuer Zeitschlitz TS mit genügend Kapazität mit der nach den Verbindungsparametern nächstniederen Priorität ausgewählt. Sind keine freien Zeitschlitze TS mehr verfügbar, erfolgt eine Blockierungsmeldung. Ansonsten erfolgt erneut eine Interferenz-Messung.

Ist die Interferenz aus den benachbarten Funkzellen in dem ausgewähltem Zeitschlitz TS nicht zu groß, kann er verwendet werden. Der Erfolg für die Auswahl dieses Zeitschlitzes TS kommt in einer Erhöhung der Priorität dieses Zeitschlitzes TS für die verwendeten Parameter in der Prioritätentabelle zum Ausdruck.

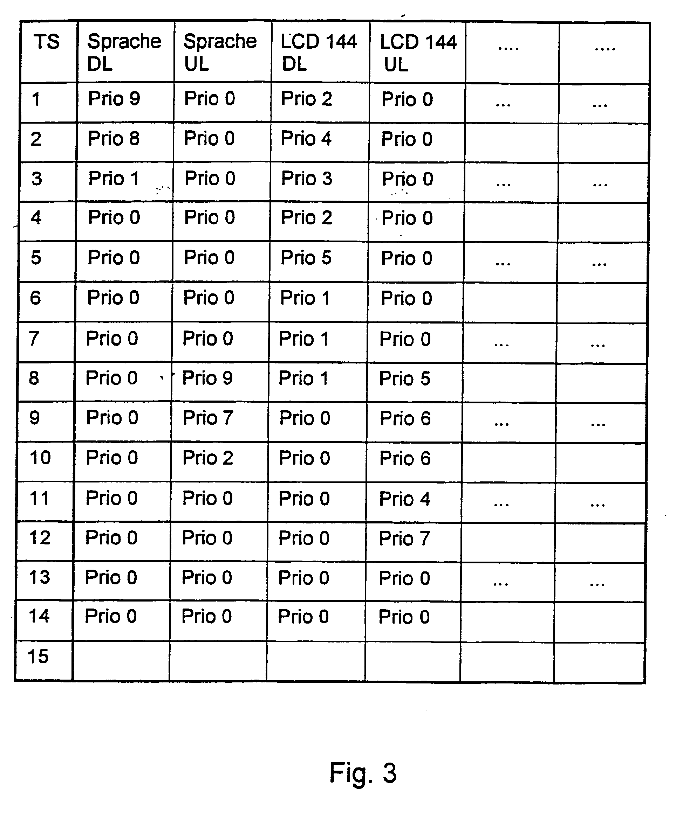

In Fig. 3 ist eine unter Verwendung des erfindungsgemäßen Algorithmus erzeugte dynamische Prioritätentabelle für einen ausgewählten Zeitpunkt für ein TDD-System dargestellt. Eine solche oder ähnliche Prioritätentabelle wird vom Algorithmus nach Fig. 2 verwendet.

Diese Prioritätentabelle unterscheidet bei jedem Zeitschlitz TS zwischen Dienst und Verbindungsrichtung. Weitere verbindungsrelevante Parameter können hinzukommen. In der Prioritätentabelle ist beispielsweise für einen Sprachdienst erkenntlich, daß der Zeitschlitz TS 1 für den Downlink DL und der Zeitschlitz TS 8 für den Uplink UL am besten geeignet sind. Für einen höherratigen Datendienst LCD 144 sind hingegen für den Downlink der Zeitschlitz TS 5 und für den Uplink der Zeitschlitz TS 12 am höchsten priorisiert.

Jede der Spalten der Tabelle in Figur 3 ist einer separaten Klasse von Verbindungsanforderungen zugeordnet. So bezeichnet die Anforderungsklasse der zweiten Spalte der Tabelle einen Sprachdienst in Abwärtsrichtung.

Durch die Priorisierung eines Kanals - im Beispiel eines Zeitschlitzes TS (und zusätzlich beispielsweise eines entsprechenden CDMA-Spreizcodes) - nach Verbindungsparametern wird verhindert, daß Dienste mit anderen Qualitätsanforderungen (d.h. einer anderen Anforderungsklasse) eine Aussage über die allgemeine Kanalqualität verfälschen.

## Patentansprüche

1. Verfahren zur Kanalzuteilung in einem Funk-Kommunikationssystem, bei dem
- auftretende Verbindungsanforderungen einer von wenigstens zwei Anforderungsklassen (Sprache DL, Sprache UL, LCD 144 DL, LCD 144 UL) zugeordnet werden, die sich durch wenigstens einen verbindungsrelevanten Parameter voneinander unterscheiden,
**dadurch gekennzeichnet, dass**
- die zur Verfügung stehenden Kanäle (TS) für jede der Anforderungsklassen (Sprache DL, Sprache UL, LCD 144 DL, LCD 144 UL) in unterschiedlicher Weise priorisiert werden,
- und die Reihenfolge der Zuteilung der Kanäle (TS) zu aufeinander folgenden Verbindungsanforderungen in Abhängigkeit der Priorisierung der jeweiligen Anforderungsklasse (Sprache DL, Sprache UL, LCD 144 DL, LCD 144 UL) erfolgt.

2. Verfahren nach Anspruch 1, bei dem
einer der verbindungsrelevanten Parameter die Art des durch die Verbindungsanforderung jeweils gewählten Dienstes, die jeweils gewählte Dienstgüte oder die jeweils gewählte Verbindungsrichtung ist.

3. Verfahren nach einem der vorstehenden Ansprüche,
bei dem die Priorisierung der Kanäle (TS) für jede der Anforderungsklassen (Sprache DL, Sprache UL, LCD 144 DL, LCD 144 UL) in Abhängigkeit des Erfolgs einer Zuteilung des betreffenden Kanals (TS) zu einer Verbindung der jeweiligen Anforderungsklasse (Sprache DL, Sprache UL, LCD 144 DL, LCD 144 UL) aktualisiert wird.

4. Verfahren nach einem der vorstehenden Ansprüche, bei dem mindestens eine Prioritätentabelle pro Funkzelle für die Eignung der Kanäle (TS) in Abhängigkeit von der Art eines bestimmten Dienstes, von der geforderten Dienstgüte, der Verbindungsrichtung und/oder von weiteren verbindungsrelevanten Parametern erstellt und gepflegt wird.

5. Verfahren nach Anspruch 4, bei dem
die Parameter separiert in verschiedenen Spalten einer Tabelle oder verteilt auf mehrere Tabellen gehalten werden.

6. Verfahren nach einem der vorstehenden Ansprüche, bei dem eine Prioritätentabelle dynamisch aktualisierte Erfahrungswerte für Kanäle (TS) unter Berücksichtigung verbindungsrelevanter Parameter widerspiegelt.

7. Verfahren nach einem der vorstehenden Ansprüche, bei dem in eine Prioritätentabelle statische, vom Netzwerk vorgegebene Werte einbezogen werden.

8. Verfahren nach einem der vorstehenden Ansprüche, bei dem die Priorisierung der Kanäle (TS) anhand eines Algorithmus zur Kanalzuteilung vorgenommen wird und der Algorithmus bei der Zuteilung der Kanäle (TS) seinerseits auf mindestens eine Prioritätentabelle zugreift.

9. Verfahren nach einem der vorstehenden Ansprüche, bei dem nur die verbindungsrelevanten Anteile einer Prioritätentabelle auf die Kanalzuteilung Einfluß haben, und nur diese aktualisiert werden.

10. Verfahren nach einem der vorstehenden Ansprüche,
das in einem TD/CDMA-basierten System, in welchem ein Kanal innerhalb eines Frequenzbandes (B) durch mindestens einen Zeitschlitz (TS) mit hinreichend freien Codes (C) definiert ist, durchgeführt wird.

11. Einrichtung zur Kanalzuteilung in einem Funk-Kommunikationssystem auf Grundlage einer Priorisierung der zur Verfügung stehenden Kanäle (TS), die Einrichtung aufweisend
- Mittel zum Zuordnen von auftretenden Verbindungsanforderungen zu einer von wenigstens zwei Anforderungsklassen (Sprache DL, Sprache UL, LCD 144 DL, LCD 144 UL), die sich durch wenigstens einen verbindungsrelevanten Parameter voneinander unterscheiden,
**dadurch gekennzeichnet, dass**
die Einrichtung ferner aufweist
- Mittel zum Priorisieren der zur Verfügung stehenden Kanäle (TS) für jede der Anforderungsklassen (Sprache DL, Sprache UL, LCD 144 DL, LCD 144 UL) in unterschiedlicher Weise, wobei
- die Reihenfolge der Zuteilung der Kanäle (TS) zu aufeinander folgenden Verbindungsanforderungen in Abhängigkeit der Priorisierung der jeweiligen Anforderungsklasse (Sprache DL, Sprache UL, LCD 144 DL, LCD 144 UL) erfolgt.

12. Einrichtung nach Anspruch 11,
**dadurch gekennzeichnet,**
**daß** mindestens eine Prioritätentabelle pro Funkzelle für die Eignung der Kanäle (TS) in Abhängigkeit von der Art eines bestimmten Dienstes, von der geforderten Dienstgüte, der Verbindungsrichtung und/oder weiteren verbindungsrelevanten Parametern im Netzwerk implementiert ist und gepflegt wird.

## Claims

1. Method for channel allocation in a radio communication system, in which
- call requests which occur are allocated to one of at least two request classes (voice DL, voice UL, LCD 144 DL, LCD 144 UL) which differ from one another by at least one connection-related parameter, **characterized in that**
- the available channels (TS) are differently prioritized for each of the request classes (voice DL, voice UL, LCD 144 DL, LCD 144 UL),
- and the order of allocation of the channels (TS) to successive call requests is provided in dependence on the prioritization of the respective request class (voice DL, voice UL, LCD 144 DL, LCD 144 UL).

2. Method according to Claim 1, in which one of the connection-related parameters is the type of the service selected in each case by the call request, the quality of service selected in each case or the connection direction selected in each case.

3. Method according to one of the preceding claims, in which the prioritization of the channels (TS) is updated for each of the request classes (voice DL, voice UL, LCD 144 DL, LCD 144 UL) in dependence on the success of an allocation of the relevant channel (TS) to a connection of the respective request class (voice DL, voice UL, LCD 144 DL, LCD 144 UL).

4. Method according to one of the preceding claims, in which at least one priority table is created and maintained per radio cell for the suitability of the channels (TS) in dependence on the type of a particular service, on the quality of service required, the connection direction and/or on other connection-related parameters.

5. Method according to Claim 4, in which the parameters are kept separated in different columns of a table or distributed over a number of tables.

6. Method according to one of the preceding claims, in which a priority table reflects dynamically updated empirical values for channels (TS), taking into consideration connection-related parameters.

7. Method according to one of the preceding claims, in which static values predetermined by the network are included in a priority table.

8. Method according to one of the preceding claims, in which the prioritization of the channels (TS) is carried out by means of an algorithm for channel allocation and the algorithm in turn accesses at least one priority table during the allocation of the channels (TS).

9. Method according to one of the preceding claims, in which only the connection-related components of a priority table have an influence on the channel allocation and only these are updated.

10. Method according to one of the preceding claims, which is carried out in a TD/CDMA-based system in which a channel within a frequency band (B) is defined by at least one timeslot (TS) having sufficient free codes (C).

11. Device for channel allocation in a radio communication system on the basis of a prioritization of the available channels (TS), the device comprising
- means for allocating call requests which occur to one of at least two request classes (voice DL, voice UL, LCD 144 DL, LCD 144 UL) which differ from one another by at least one connection-related parameter, **characterized in that** the device furthermore has
- means for differently prioritizing the available channels (TS) for each of the request classes (voice DL, voice UL, LCD 144 DL, LCD 144 UL), wherein
- the order of allocation of the channels (TS) to successive call requests is provided in dependence on the prioritization of the respective request class (voice DL, voice UL, LCD 144 DL, LCD 144 UL).

12. Device according to Claim 11, **characterized in that** at least one priority table is implemented and maintained per radio cell for the suitability of the channels (TS) in dependence on the type of a particular service, on the quality of service required, the connection direction and/or other connection-related parameters in the network.

## Revendications

1. Procédé pour l'attribution de canal dans un système de radiocommunication, dans lequel,
- des demandes de liaison apparaissant sont attribuées à une d'au moins deux classes de demandes (langage DL, langage UL, LCD 144 DL, LCD 144 UL), qui se différencient l'une de l'autre par au moins un paramètre important au niveau de la liaison,
**caractérisé en ce que,**
- les canaux (TS) mis à disposition sont mis en priorité de façon différente pour chacune des classes de demande (langage DL, langage UL, LCD 144 DL, LCD 144 UL),
- et l'ordre de succession de l'attribution des canaux (TS) aux demandes de liaison consécutives s'effectue en fonction de la mise en priorité de la classe de demande respective (langage DL, langage UL, LCD 144 DL, LCD 144 UL).

2. Procédé selon la revendication 1, dans lequel
l'un des paramètres importants au niveau de la liaison est la nature du service choisi respectivement par la demande de liaison, la qualité de service respectivement choisie ou le sens de liaison respectivement choisi.

3. Procédé selon l'une quelconque des revendications précédentes,
dans lequel la mise en priorité des canaux (TS) est mise à jour pour chacune des classes de demande (langage DL, langage UL, LCD 144 DL, LCD 144 UL) en fonction du résultat d'une attribution du canal correspondant (TS) à une liaison de la classe de demande respective (langage DL, langage UL, LCD 144 DL, LCD 144 UL).

4. Procédé selon l'une quelconque des revendications précédentes, dans lequel
au moins un tableau de priorités par cellule radio est établi et actualisé pour la qualification des canaux (TS) en fonction de la nature d'un service défini, de la qualité de service exigée, du sens de liaison et/ou d'autres paramètres importants au niveau de la liaison.

5. Procédé selon la revendication 4, dans lequel,
les paramètres sont gérés séparés dans différentes colonnes d'un tableau ou répartis entre plusieurs tableaux.

6. Procédé selon l'une quelconque des revendications précédentes, dans lequel,
un tableau de priorités reflète des valeurs empiriques actualisées de façon dynamique pour des canaux (TS) en tenant compte de paramètres importants au niveau de la liaison.

7. Procédé selon l'une quelconque des revendications précédentes, dans lequel
des valeurs statiques, prédéfinies par le réseau, sont intégrées dans un tableau de priorités.

8. Procédé selon l'une quelconque des revendications précédentes, dans lequel
la mise en priorité des canaux (TS) est effectuée à l'aide d'un algorithme d'attribution de canal et l'algorithme recourt pour sa part à au moins un tableau de priorités pour l'attribution des canaux (TS).

9. Procédé selon l'une quelconque des revendications précédentes, dans lequel
seules les parties, importantes au niveau de la liaison, d'un tableau de priorités ont une influence sur l'attribution de canal, et seules ces parties sont actualisées.

10. Procédé selon l'une quelconque des revendications précédentes,
qui est appliqué dans un système basé sur TD/CDMA, dans lequel un canal est défini à l'intérieur d'une bande de fréquences (B) par au moins un créneau temporel (TS) avec des codes (C) suffisamment libres.

11. Dispositif pour l'attribution de canal dans un système de radiocommunication sur la base d'une mise en priorité des canaux (TS) mis en priorité, le dispositif présentant
- des moyens pour l'attribution de demandes de liaison apparaissant à l'une d'au moins deux classes de demande (langage DL, langage UL, LCD 144 DL, LCD 144 UL), qui se différencient l'autre de l'autre par au moins un paramètre important au niveau de la liaison,
**caractérisé en ce que**
le dispositif présente également
- des moyens pour la mise en priorité des canaux (TS) mis à disposition pour chacune des classes de demande (langage DL, langage UL, LCD 144 DL, LCD 144 UL) de façons différentes,
- l'ordre de succession de l'attribution des canaux (TS) à des demandes de liaison consécutives s'effectuant en fonction de la mise en priorité de la classe de demande respective (langage DL, langage UL, LCD 144 DL, LCD 144 UL).

12. Dispositif selon la revendication 11,
**caractérisé en ce que**
au moins un tableau de priorités est mis en place et est actualisé par cellule radio pour la qualification des canaux (TS) en fonction de la nature d'un service défini, de la qualité de service exigée, du sens de liaison et/ou d'autres paramètres importants au niveau de la liaison dans le réseau.
